Europäisches Patentamt

(19) European Patent Office

Office européen des brevets

(11) EP 0 921 657 B1

(12) EUROPEAN PATENT SPECIFICATION

(45) Date of publication and mention
of the grant of the patent:
12.02.2003 Bulletin 2003/07

(51) Int Cl.⁷: **H04L 12/28**, A63F 9/24,
G06K 11/18, G06F 3/033

(21) Application number: 98309542.3

(22) Date of filing: 23.11.1998

(54) **Method and apparatus for transmitting data**

Verfahren und Vorrichtung zur Datenübertragung

Procédé et appareil de transmission de données

(84) Designated Contracting States:
AT BE CH CY DE DK ES FI FR GB GR IE IT LI LU
MC NL PT SE

(30) Priority: 02.12.1997 EP 97309670

(43) Date of publication of application:
09.06.1999 Bulletin 1999/23

(73) Proprietor: **Two Way TV Limited**
Avonmore Road, London W14 8TS (GB)

(72) Inventors:
• **Weston, David Robert**
Chinnor, Oxfordshire OX9 4BX (GB)
• **Copper, Andrew James**
Boulder, CO 80303-7236 (US)
• **Johnson, Andrew**
Banstead, Surrey SH7 1ET (GB)
• **Walton, Anthony Stephen**
Englefield Green, Surrey TW20 0NX (GB)

• **Woodfield, David Alan**
Bloxwich, Walsall WS3 3RX (GB)

(74) Representative: **Skone James, Robert Edmund**
GILL JENNINGS & EVERY
Broadgate House
7 Eldon Street
London EC2M 7LH (GB)

(56) References cited:
EP-A- 0 649 102        WO-A-96/37866
US-A- 4 924 216

• PATENT ABSTRACTS OF JAPAN vol. 013, no.
207 (E-758), 16 May 1989 & JP 01 024536 A
(YAMATAKE HONEYWELL CO LTD;OTHERS:
01), 26 January 1989
• PATENT ABSTRACTS OF JAPAN vol. 010, no.
186 (E-416), 28 June 1986 & JP 61 033060 A
(OMRON TATEISI ELECTRONICS CO), 15
February 1986

## Description

The present invention relates to a method and apparatus for transmitting items of information from a plurality of data sources to a data destination over a common data channel.

An example of a system of this type is an interactive home entertainment games console. A number of players are each provided with a handset. Each player presses buttons on their respective handset, causing the handset to generate game-play data which is transmitted via an infra-red link to a central game controller.

Since all handsets are transmitting over a common infra-red data channel it is necessary to multiplex the data from the different handsets. Conventionally this is achieved by time division multiplexing in which each handset transmits data in a defined time slot. A problem with time division multiplexing is that the handsets must be synchronised under control of the central game controller to ensure that only one handset is transmitting at any one time. This requires a two-way link between the handsets and the central game controller, along with additional computing power to provide synchronisation control. As a result the system can be expensive.

US-A-4924216 describes joy stick controller apparatus in which a pair of joy stick controllers may send signal bursts on the same communication channel in the infra-red frequency range by means of an electromagnetic transmission. One joy stick transmits signals having a duration of T0 and a repetition period of T1 while the second joy stick transmits a signal having a duration equal to T0 and a repetition period of T2 where T2 is selected to be at least two T0 greater than T1, at least four times greater than T0 and less than 16.6 milliseconds. This approach is suitable where a simple video game apparatus is concerned but is not suitable more generally in the field of broadcast media control and game playing which involve much more complex signalling arrangements and usually more than two data sources.

In accordance with a first aspect of the present invention there is provided a method of transmitting items of information from a plurality of data sources to a data destination over a common data channel, the method comprising:

transmitting the items of information from each data source to the data destination as a series of data packets, each data packet being separated from successive data packets transmitted by the same data source by a repetition period, the repetition period of each data source being different from the repetition periods of the other data sources; and repeatedly transmitting each item of information from the same data source in at least N adjacent data packets, where N is the number of data sources, in order to ensure that at least one of the N adjacent data packets is received at the data destination without overlapping with data packets from the other data sources, wherein

$$Period \ n = 2 * burst \ period * [(N-1)^2 + n]$$

where Period n is the repetition period of the nth data source and burst period is a parameter related to the length of the data packets.

In accordance with a second aspect of the present invention there is provided communication apparatus comprising a data destination having a receiver for receiving data transmitted over a common data channel; and a plurality of data sources each comprising:

a) a transmitter for transmitting items of information to the data destination over the common data channel; and
b) a processor for controlling the transmitter such that the transmitter transmits the items of information as a series of data packets, each data packet being separated from successive data packets transmitted by the same data source by a repetition period, and each item of information being transmitted in at least N adjacent data packets from the same data source, where N is the number of data sources,

wherein the repetition period of each data source is different from the repetition periods of the other data sources, and wherein

$$Period \ n = 2 * burst \ period * [(N-1)^2 + n]$$

where Period n is the repetition period of the nth data source and burst period is a parameter related to the length of the data packets.

The present invention provides a particularly convenient method of multiplexing without requiring any two-way communication or synchronisation between the data sources and the data destination. The system is also robust and can cope with drift in the repetition periods of the data sources without significantly affecting the reliability of transmission. As a result much cheaper components can be used than in previous systems.

The repetition period is typically defined by the time between the start of two successive data packets. Depending on the coding scheme the data packets may always have the same length or may have a length which varies in accordance with the amount of information being transmitted by the data packet. However in both cases each data source typically has a predetermined maximum data packet length, ie. a limited time slot in which the data source is permitted to transmit data.

Each data source may have different maximum data packet lengths. For instance the data source with the shortest repetition period may have a shorter maximum data packet length (and hence each data packet transmits less data) than the data source with the longest repetition period. However preferably each data source has the same maximum data packet length.

Each item of information may be repeated over more than N data packets. However preferably each item of information is transmitted from the same data source in N data packets in order to optimise the data rate.

One or more of the data sources may have a repetition period which varies during the transmission of the N successive data packets. However preferably each data source has a repetition period which remains substantially constant (apart from the effect of drift) at least during the transmission of the N successive data packets, and preferably at all times.

The repetition periods of the data sources may be unequally spaced. For example four data sources may be provided with repetition periods of 20ms,22ms, 26ms, and 28ms. However in a preferred example the repetition periods of the data sources are equally spaced.

In this invention, the difference in repetition period between any two data sources is great enough so that if overlap occurs between two data packets, it will not occur between the same two data sources on the next two data packets. Also, the difference in repetition period between any two data sources is small enough that if the data packets from two handsets overlap once they will not overlap again for at least another N repetition periods.

The method may be employed in any communication system which transmits data from a number of sources over a common data channel.

The invention can be implemented to transmit items of information to a variety of data destinations. However, the invention is particularly suited to a method of controlling a broadcast media receiving system, the method comprising transmitting control items of information to the broadcast media receiving system using a method according to the first aspect of the invention.

The invention also provides broadcast media receiving apparatus comprising a broadcast media receiving system; and communication apparatus according to the second aspect of the invention for controlling the broadcast media receiving system.

The broadcast media receiving system may comprise an analogue and/or digital broadcast media receiving system and will typically include a set top box (STB) or an integrated TV or video cassette recorder (VCR) which in one example is controlled by items of information supplied from the data sources. These data sources typically comprise remote control apparatus.

For example, each data source could comprise a remote control including a plurality of input buttons representing numbers, channels, TV operations, VCR operations, and/or STB operations with an optional direction device made up of two or more buttons representing up and down, and/or left and right etc. or a mouse/rollerball/strain gauge type XY pointer apparatus for providing signal information.

The broadcast media receiving system will usually include a receiver which can be tuned to one of a number of different broadcast channels and in one example the communication apparatus is adapted to control the channel to which the broadcast media receiver is tuned. Alternatively, channel selection may be achieved separately from the data sources.

Alternatively, or in addition, the broadcast media receiving system may include a broadcast media receiver adapted to receive game data, the data sources being adapted to generate game play data which is transmitted to a game controller of the broadcast media receiving system. The broadcast signals may relate solely to the game data but in a preferred arrangement, the game data is broadcast in association with TV programmes or the like to which the game data is related. An example of such a system is described in EP-A-0873772.

When used in conjunction with a game, the method may further comprise calculating a time stamp value in accordance with the time delay between generating the item of information and transmitting the data packet; encoding the time stamp value in the data packet; decoding the data packet at the data destination to retrieve the time stamp value; and calculating the time delay associated with the data packet in accordance with the retrieved time stamp value. This is described in more detail in our copending European Patent Application No. 97309664.7.

At the simplest level the item of information may be encoded in a single bit of binary data (ie. a "1" or a "0"). Alternatively the item of information may be encoded in a string of bits of binary data, the number of bits depending on the requirements of the system. Typically each data packet includes an identifier which identifies the originating data source, along with a data field which encodes the item of information. The data in the data field may also be encoded with a time stamp. The time stamp may be an absolute time stamp - in this case the time stamp will not change between the N adjacent data packets. However in a preferred embodiment each time stamp is a relative time stamp which is calculated in accordance with the time delay between generating the item of information and transmitting the data packet. In this preferred case the N successive data fields will carry different data (as a consequence of their different relative time stamps) but each data field encodes the same item of information.

An embodiment of the present invention will now be described with reference to the accompanying drawings, in which:

Figure 1 is a schematic block diagram of an interactive broadcast network;
Figure 2 shows the game controller and one handset in more detail;
Figure 3 illustrates the transmission of data packets from one of the handsets; and
Figure 4 illustrates the different time slot pulses generated by the four handsets.

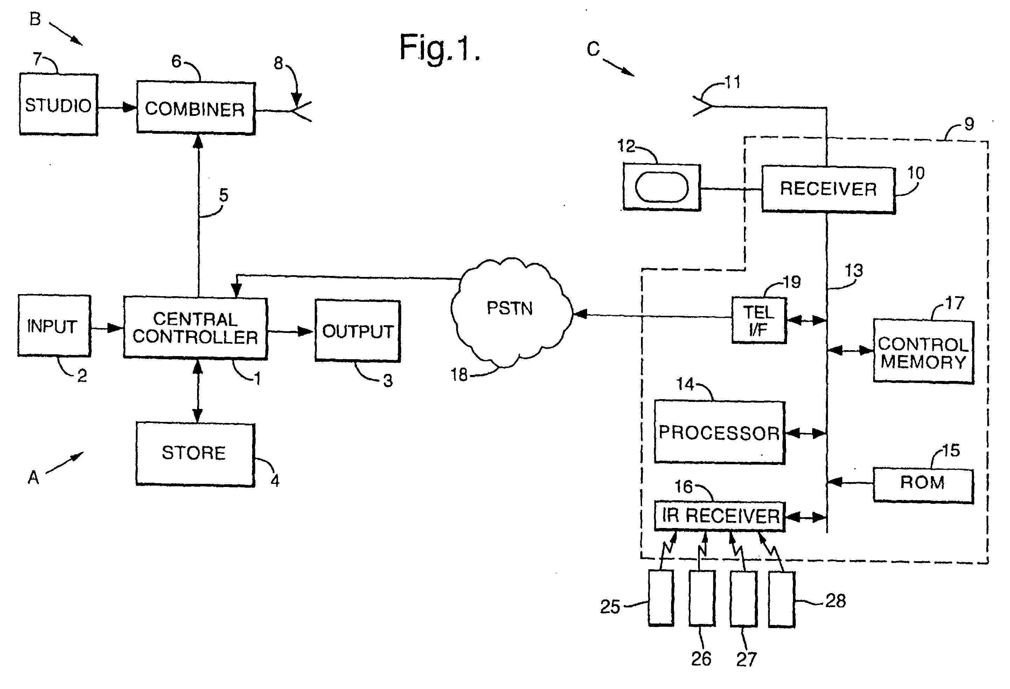

The interactive broadcast network shown in Figure 1 comprises a game control system A at a central site and including a central controller 1 which will include a computer such as a PC operating a Windows based system, connected to an input device 2 such as a keyboard and/or mouse and the like and to an output device 3 which may include a monitor and/or printer. A store 4 contains a database storing data relating to service functions and remote users, which can be accessed and amended by the central controller 1, and a Live File store storing data relating to the game being or to be broadcast. The central controller 1 generates data which can be converted to TV display signals and other control signals associated with various service functions, on a land line 5 connected to a combining unit 6 defining an insertion point of a TV broadcast system B. The combining unit 6 receives television broadcast signals from a studio 7 (or outside broadcast (OB) location, in the case of a live event), and combines these with the signals on the line 5 so that they are transmitted simultaneously by a transmitter 8 to remote users or players C. In other applications, the signals from the central controller 1 and the studio or OB 7 will be transmitted separately.

The signals applied to the combiner 6 may be transmitted to the remote units within a vertical blanking interval (VBI) of the normal TV signal or on a separate radio FM-SCA channel or other data format such as a cable modem, or the Internet. Typically, the transmitted signals will be in digital form but the invention is also applicable to analogue signals.

Each remote user C has a home or remote unit 9 formed by a Set Top Box (STB) having a tunable television receiver 10 connected to an aerial 11 and a monitor 12. The home unit 9 includes an address/databus 13 connected to the receiver 10, the bus 13 being connected to a microprocessor 14, a memory 15, such as a ROM, storing programme instructions for the processor 14, an infra-red receiver 16, and a control memory (RAM) 17. Signals transmitted by the processor 14 can be communicated to the central controller 1 via a public switched telephone network 18 which is selectively accessed by a telephone interface unit 19 connected to the bus 13.

Alternative media such as cable or the internet can be used for the return signals (as for the signals transmitted to the remote unit C). In general the return signals will be transmitted over a different medium to the incoming signals.

The game control system A can be used to control a variety of games including interactive, predictive games and two examples of such interactive, predictive games are described in EP-A-0873772.
In the first example, play live football, the remote players are able to attempt to predict certain events prior to commencement of a live football match which is broadcast by the transmitter 8 and can also attempt to predict certain events during the live broadcast. In the second example, a predictive game for use with broadcast horse racing is described.

The invention is also concerned with games which can be played between participants at the same remote location C. These may be, for example, games based on quiz shows and the like where a question is presented with a set of multiple choice answers and the users at the remote location C must compete together to be the first to answer correctly from a multiple selection of answers. The questions may or may not be linked to a quiz show being broadcast simultaneously.

In order to enable the users to communicate with the STB 9, each user has his own handset 25-28 which is physically separate from the STB 9 but can communicate with the IR receiver 16 of the STB 9 via signals generated in the infra-red waveband. The IR receiver 16 then converts those signals for supply to the processor 14 along the data bus 13.

As mentioned above, each remote handset 25-28 can have a variety of control buttons provided as is well known in the art. Each handset can be used to control the channel to which the receiver 10 is tuned, the tuning being effected via the processor 14. In addition, each remote handset 25-28 can be used to control the location of a respective cursor (not shown) displayed on the monitor 12, movement of a button or the like on the remote handset generating signals to which the processor 14 responds by causing equivalent movement of the cursor about the display screen of the monitor 12. A further button is provided to enable the user to "select" an item indicated by the cursor in those applications where this is necessary.

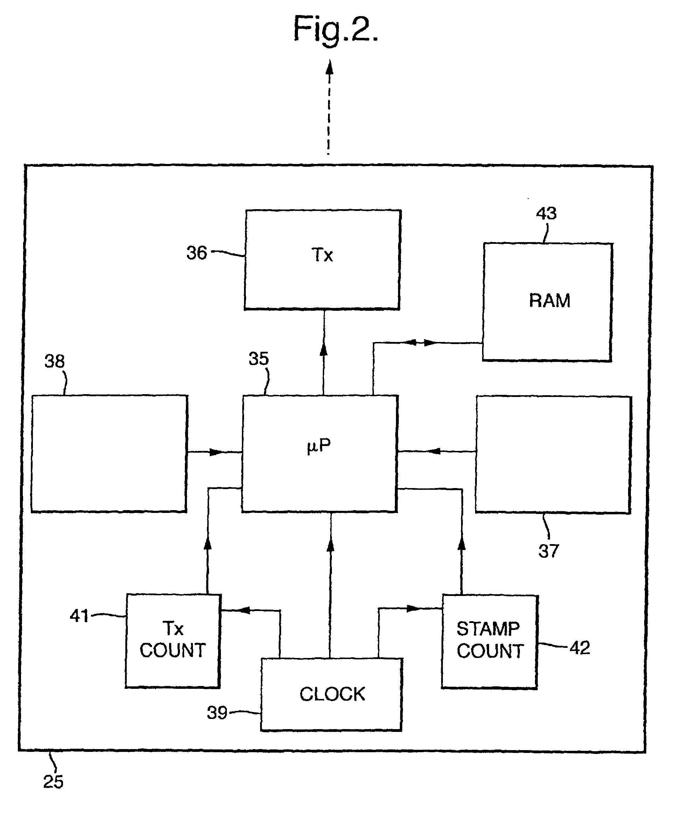

Each handset 25-28 has substantially the same construction and the construction of the handset 25 will be described in more detail with reference to Figure 2.

The remote handset comprises a central microprocessor 35 which controls an infra-red transmitter 36 as discussed below. A cursor control device 37 generates signals for controlling the position of the respective one of the cursors on the monitor 12, and an array of user actuable buttons 38 feed data to the microprocessor 35. An oscillator 39 (such as a quartz crystal or ceramic resonator) generates a 115200 Hz clock signal with an accuracy of approximately 1%. The clock signal is fed to the microprocessor 35, to a transmit time slot counter 41, and to a time stamp counter 42.

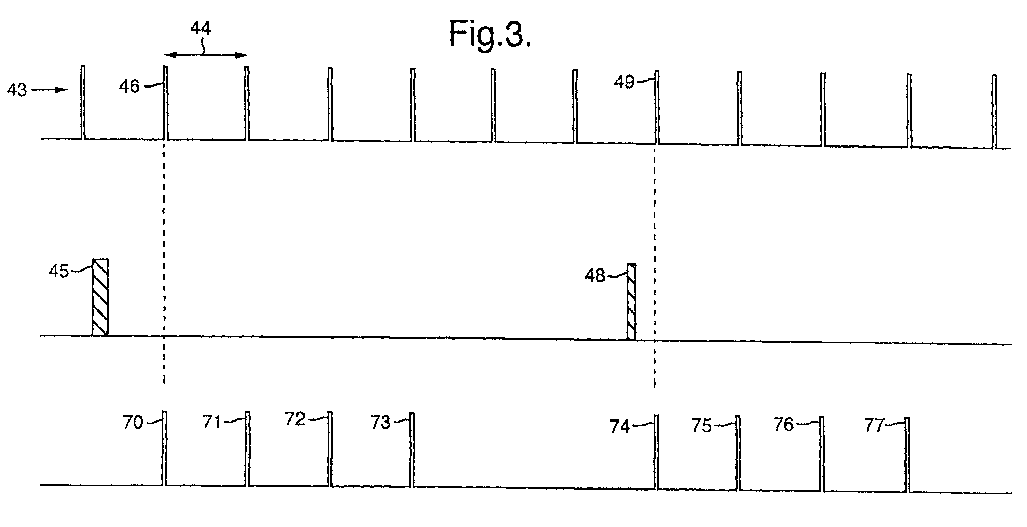

Referring to Figure 3, the transmit time slot counter 41 cyclically counts for a selected number of clock cycles and generates a time slot pulse 43 once every cycle, with a repetition period 44 between successive time slot pulses 43. In the case of handset 25 the repetition period 44 is 20ms. When one of the array of buttons 38 is pressed, an item of information 45 is generated which is stored in RAM 43 by the microprocessor 35. When the next time slot pulse 46 is received, the microprocessor 35 reads the stored information from RAM 43 and repeatedly transmits it in four successive data packets 70-73 via infra-red transmitter 36. The cursor control device 37 subsequently generates an item of information at 48 which is stored in RAM 43. When the next time slot pulse 49 is received, the microprocessor 35 reads the stored information from RAM 43 and repeatedly transmits it in four successive data packets 74-77 via infra-red transmitter 36.

The time stamp counter 42 starts counting every time at item of information is generated by the buttons 38 or cursor control device 37. The time stamp counter 42 increments twice every repetition period (ie. every 10ms in the case of handset 25) and the present value of the time stamp counter 42 is added to each data packet. For instance the button data 45 is generated 18ms before the time slot pulse 46. Therefore the four data packets 70-73 are time stamped with time stamp values 1,3,5 and 7 respectively. In contrast the cursor control data 48 is generated only 5ms before the time slot pulse 49. Therefore the four data packets 74-77 are time stamped with time stamp values 0,2,4 and 6 respectively.

Each data packet carries 80 bits which are transmitted at a bit rate of 115200 Hz over a data packet length of 0.69ms. Each data packet comprises an identifier to identify which handset 25-28 has generated the data packet, a data field and a check field. The data field is encoded to contain the information stored in RAM 23, along with a time stamp value from counter 42.

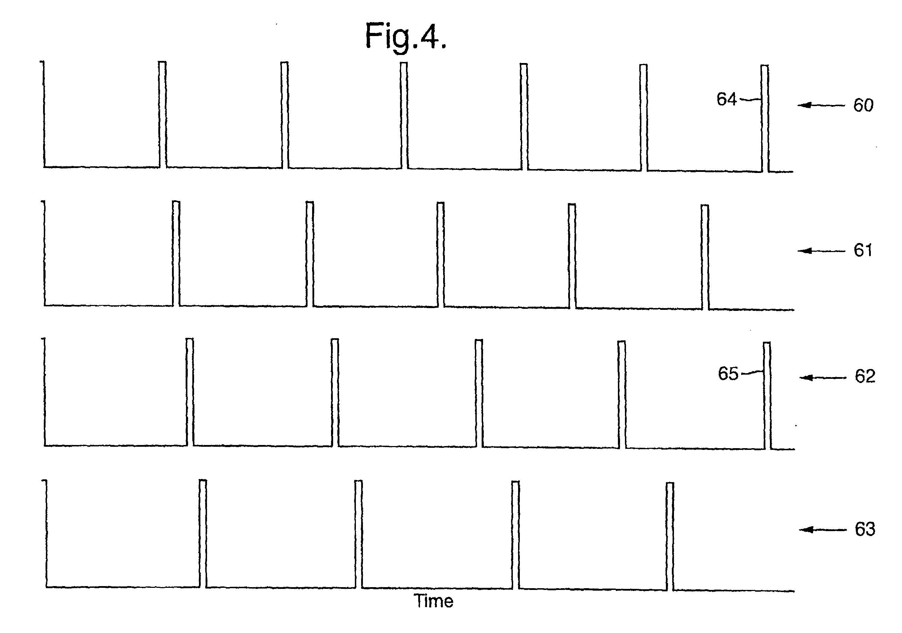

Referring to Figure 4, the transmit time slot counters 41 of the four handsets 25-28 are each programmed to generate time slot pulses at different repetition rates. The first handset 25 has a transmit time slot counter 41 which counts 2304 clock cycles and generates a time slot pulse 60 every 20ms. In contrast, the transmit time slot counter in the second handset 26 counts 2534 clock cycles and generates a time slot pulse 61 every 22ms. The third and fourth handsets 27,28 generate time slot pulses 62,63 with repetition periods of 24ms and 26ms respectively.

Because the time slot pulses 60-63 are not synchronised, their timing relationship will drift. Rather than try to synchronise the handsets, their repetition periods are deliberately set to be slightly different so that their relative phases are constantly changing. This will occasionally cause overlap as two handsets send two data packets at once. For instance, in Figure 4 time slot pulse 64 from handset 25 overlaps with time slot pulse 65 from handset 27. When this happens, any data packets sent in response to the time slot pulses 64,65 will be corrupted. So as to avoid loss of data, each item of information is repeated four times by each handset.

The microprocessor 14 in the STB 9 decodes each data packet as it arrives, and sends display signals to the monitor 12 in response to the information carried by the data packet. The microprocessor 14 knows the repetition period of each handset. When it receives a data packet it checks the time stamp value and calculates the time delay. For example, referring to Figure 3, the first data packet 70 has a time stamp value of 1. Therefore the microprocessor 14 knows that the button data 45 was generated 10-20ms before the data packet 70 was transmitted. The microprocessor 14 also accounts for any delays in receiving and processing the data packets. If the first data packet 70 overlaps with another data packet, or is lost due to other interference, then the microprocessor can simply decode the next data packet 71 to retrieve the same information. In this case the time stamp value is 3, indicating that the button data 45 was generated 30-40ms before the data packet 71 was transmitted. By calculating the actual time that the buttons 38 were pressed, rather than the time that the data packets are received, the microprocessor 33 can make correct decisions in time critical action games, and can also calculate the correct order that buttons were pressed across all four handsets.

By carefully selecting the data packet lengths and repetition periods as discussed below, clear reception of at least one copy of each item of information can be guaranteed whilst the data rate of each handset is maximised.

In this example the difference in repetition period between each handset is chosen to be equal. Therefore the repetition period of each handset is given as follows:

$$\text{Period n} = \text{Period 1} + (n-1)\,\text{Delta}$$

where "Period n" is the repetition period of the nth handset, and "Delta" is the difference in repetition period.

Therefore

$$\text{Period 2} = \text{Period 1} + \text{Delta}$$

$$\text{Period 3} = \text{Period 2} + \text{Delta}$$

$$\text{Period 4} = \text{Period 3} + \text{Delta}$$

Delta must be great enough so that if any overlap occurs it will not occur between the same two handsets on the next data packet. The infra-red receiver 16 will also have a characteristic recovery time. In addition the oscillator 39 may drift causing a change in bit rate. This results in the following constraint:

$$\text{Delta} \geq 2*(\text{burst length}),$$

where

$$\text{burst length} = \text{data packet length} + \text{recovery time} +$$

$$\text{bit rate accuracy}.$$

In the example given above, the data packet length is determined by the bit rate (115200 Hz) and number of bits per data packet (80) as 80/115200=0.694ms. A typical value of the recovery time is 0.3ms. Typically the bit rate is accurate to 1%. As a result the burst length is typically 1ms, giving Delta a minimum value of 2ms.

The difference in repetition period between any two transmitters must also be small enough such that if the data packets from two handsets collide once, they will not collide again until the data packet has changed. This results in the following constraint:

$$(N-1)*(\text{Period } N) + 2*(\text{burst length}) \leq N*\text{Period } 1$$

where N is the number of transmitters (in this case four).

To maximise data rate and minimise delay, the repetition periods should be as short as possible. Combining the above constraints gives the following optimum relationship between the burst length and the repetition period:

$$\text{Period } n = 2*(\text{burst length})*[(N-1)^2 + n].$$

So the optimum repetition periods for the four handset system of Figure 1 are:

$$\text{Period } 1 = 20 * \text{burst length} = 20\text{ms}$$

$$\text{Period } 2 = 22 * \text{burst length} = 22\text{ms}$$

$$\text{Period } 3 = 24 * \text{burst length} = 24\text{ms}$$

$$\text{Period } 4 = 26 * \text{burst length} = 26\text{ms}$$

As the repetition period is proportional to the data packet length, the data packet length can be chosen to suit the delay requirements of the system without affecting the overall data capacity.

The handset with the longest repetition period transmits data at a lower rate than the handset with the shortest repetition period. However the players will rarely press the buttons 38 quickly enough to generate a continuous series of data packets. Therefore the difference in data rates is generally not a problem. However if the differing data rates become a problem, then the system can be adapted to transmit more bits in the less frequent data packets. For instance the four handsets 25-28 could transmit data packets containing 80,88,94 and 102 bits respectively.

In an alternative embodiment, the microprocessor 35, oscillator 39, transmit time slot counter 41 and time stamp counter 42 are replaced by a dedicated IC (not shown) which performs the same functions.

## Claims

1. A method of transmitting items of information from a plurality of data sources (25-28) to a data destination (16) over a common data channel, the method comprising:

   transmitting the items of information from each data source (25-28) to the data destination as a series of data packets, each data packet being separated from successive data packets transmitted by the same data source by a repetition period, the repetition period of each data source being different from the repetition periods of the other data sources; and repeatedly transmitting each item of information from the same data source in at least N adjacent data packets, where N is the number of data sources, in order to ensure that at least one of the N successive data packets is received at the data destination without overlapping with data packets from the other data sources, **characterized in that**

   $$\text{Period } n = 2*\text{burst period}*[(N-1)^2 + n]$$

   where Period n is the repetition period of the nth data source and burst period is a parameter related to the length of the data packets.

2. A method according to claim 1, wherein the data packets from each data source are transmitted over a wireless link.

3. A method according to claim 2, wherein the wireless link is an infra-red link.

4. A method according to any of the preceding claims wherein each item of information is transmitted from the same data source in N data packets.

5. A method according to any of the preceding claims for controlling a broadcast media receiving system (C), the method comprising transmitting control items of information to the broadcast media receiving system.

6. A method according to claim 5, wherein the items of information control a channel to which the broadcast media receiving system (C) is tuned.

7. A method according to claim 5 or claim 6, wherein the broadcast media receiving system (C) is adapted to receive broadcast game data, the data sources being adapted to generate game play data which is transmitted to a game controller forming part of the broadcast media receiving system.

8. Communication apparatus comprising a data destination (16) having a receiver for receiving data transmitted over a common data channel; and a plurality of data sources (25-28) each comprising:

a) a transmitter (36) for transmitting items of information to the data destination over the common data channel; and
b) a processor (35) for controlling the transmitter (36) such that the transmitter is adapted to transmit the items of information as a series of data packets, each data packet being separated from successive data packets transmitted by the same data source by a repetition period, and each item of information being transmitted in at least N adjacent data packets from the same data source, where N is the number of data sources,

wherein the repetition period of each data source is different from the repetition periods of the other data sources, **characterized in that**

$$\text{Period } n = 2*\text{burst period}*[(N-1)^2 +n]$$

where Period n is the repetition period of the nth data source and burst period is a parameter related to the length of the data packets.

9. Apparatus according to claim 8, wherein the receiver (16) and transmitters (36) communicate over a wireless link.

10. Apparatus according to claim 9, wherein the wireless link is an infra-red link.

11. Apparatus according to any of claims 8 to 10, wherein each data source (25-28) comprises an oscillator (39) which controls the repetition period of the data source, wherein the oscillator has an accuracy equal to or worse than 1%.

12. Apparatus according to any of claims 8 to 11, wherein each data source (25-28) comprises a counter (41) which is adapted to cyclically count to generate a time slot clock signal, wherein each processor is adapted to respond to a respective time slot clock signal to cause the transmitter to transmit a data packet.

13. Apparatus according to any of claims 8 to 12, wherein the data destination (16) is unable to transmit data to the data sources (25-28), and the data sources are unable to receive data from the data destination.

14. Communication apparatus according to any of claims 8 to 13, the communication apparatus controlling a broadcast media receiving system.

15. Apparatus according to claim 14 wherein the broadcast media receiving station (C) includes a receiver (10) which can be tuned to one of a number of different broadcast channels, the communication apparatus being adapted to control the channel to which the broadcast media receiver is tuned.

16. Apparatus according to claim 15, wherein the broadcast media receiver (10) can be tuned to one of a number of broadcast TV channels.

17. Apparatus according to any of claims 14 to 16, wherein the broadcast media receiving system (C) includes a broadcast media receiver adapted to receive game data, the data sources being adapted to generate game play data which is transmitted to a game controller of the broadcast media receiving system.

**Patentansprüche**

1. Ein Verfahren zum Übertragen von Informationsposten von einer Mehrzahl Datenquellen (25-28) über einen gemeinsamen Datenkanal an ein Datenziel (16), wobei das Verfahren umfaßt:

Übertragen der Informationsposten von jeder Datenquelle (25-28) an das Datenziel als eine Serie von Datenpaketen, wobei jedes Datenpaket von nachfolgenden Datenpaketen, die von der gleichen Datenquelle übertragen werden, um eine Wiederholperiode getrennt ist, wobei die Wiederholperiode jeder Datenquelle von den Wiederholperioden der anderen Datenquellen verschieden ist; und

wiederholtes Übertragen jedes Informationspostens von der gleichen Datenquelle in wenigstens N benachbarten Datenpaketen, wobei N die Anzahl der Datenquellen ist, um sicherzustellen, daß wenigstens eines der N nachfolgenden Datenpakete am Datenziel empfangen wird, ohne mit Datenpaketen von den anderen Datenquellen zu überlappen, **dadurch gekennzeichnet, daß**

Periode n = 2*Signalfolgenlänge*$[(N-1)^2 + n]$,

wobei Periode n die Wiederholperiode der n-ten Datenquelle und Signalfolgenlänge ein Parameter ist, der sich auf die Länge der Datenpakete bezieht.

2. Ein Verfahren gemäß Anspruch 1, wobei die Datenpakete von jeder Datenquelle über eine drahtlose Verbindung übertragen werden.

3. Ein Verfahren gemäß Anspruch 2, wobei die drahtlose Verbindung eine Infrarotverbindung ist.

4. Ein Verfahren gemäß einem der vorhergehenden Ansprüche, wobei jeder Informationsposten in N Datenpaketen von der gleichen Datenquelle übertragen wird.

5. Ein Verfahren gemäß einem der vorhergehenden Ansprüche zum Steuern eines Sendemedienempfangssystems (C), wobei das Verfahren das Übertragen von Steuerinformationsposten an das Sendemedienempfangssystem umfaßt.

6. Ein Verfahren gemäß Anspruch 5, wobei die Informationsposten einen Kanal steuern, auf den das Sendemedienempfangssystem (C) eingestellt ist.

7. Ein Verfahren gemäß Anspruch 5 oder 6, wobei das Sendemedienempfangssystem (C) aufgebaut ist, um Sendespieldaten zu empfangen, und die Datenquellen so aufgebaut sind, daß sie Spiele-Spieldaten erzeugen können, die an eine Spielsteuerung übertragen werden, die einen Teil des Sendemedienempfangssystems bildet.

8. Kommunikationsvorrichtung umfassend ein Datenziel (16) mit einem Empfänger zum Empfangen von Daten, die über einen gemeinsamen Datenkanal übertragen werden; und eine Mehrzahl Datenquellen (25-28), jeweils umfassend:

a) einen Sender (36) zum Übertragen von Informationsposten über den gemeinsamen Datenkanal an das Datenziel; und
b) einen Prozessor (35) zum Steuern des Senders (36) derart, daß der Sender ausgebildet ist, daß er die Informationsposten als eine Serie von Datenpaketen übertragen kann, wobei jedes Datenpaket von nachfolgenden Datenpaketen, die von der gleichen Datenquelle übertragen werden, um eine Wiederholperiode getrennt ist, und wobei jeder Informationsposten in wenigstens N benachbarten Datenpaketen von derselben Datenquelle übertragen wird, worin N die Anzahl der Datenquellen ist, wobei die Wiederholperiode jeder Datenquelle von den Wiederholperioden der anderen Datenquellen verschieden ist, **dadurch gekennzeichnet, daß**

Periode n = 2*Signalfolgenlänge*$[(N-1)^2 + n]$,

worin Periode n die Wiederholperiode der n-ten Datenquelle und Signalfolgenlänge ein Parameter ist, der sich auf die Länge der Datenpakete bezieht.

9. Vorrichtung gemäß Anspruch 8, worin der Empfänger (16) und die Sender (36) über eine drahtlose Verbindung kommunizieren.

10. Vorrichtung gemäß Anspruch 9, worin die drahtlose Verbindung eine Infrarotverbindung ist.

11. Vorrichtung gemäß einem der Ansprüche 8 bis 10, worin jede Datenquelle (25-28) einen Oszillator (39) umfaßt, der die Wiederholperiode der Datenquelle steuert, wobei der Oszillator eine Genauigkeit gleich oder schlechter als 1 % aufweist.

12. Vorrichtung gemäß einem der Ansprüche 8 bis 11, worin jede Datenquelle (25-28) einen Zähler (41) aufweist, der aufgebaut ist, um zyklisch zu zählen und so ein Zeitschlitz-Taktsignal zu erzeugen, und jeder Prozessor aufgebaut ist, um auf ein jeweiliges Zeitschlitz-Taktsignal zu antworten/reagieren, um zu bewirken, daß der Sender ein Datenpaket überträgt.

13. Vorrichtung gemäß einem der Ansprüche 8 bis 12, worin das Datenziel (16) nicht in der Lage ist, Daten an die Datenquellen (25-28) zu übertragen, und die Datenquellen nicht in der Lage sind, Daten vom Datenziel zu empfangen.

14. Kommunikationsvorrichtung gemäß einem der Ansprüche 8 bis 13, worin die Kommunikationsvorrichtung ein Sendemedienempfangssystem steuert.

15. Vorrichtung gemäß Anspruch 14, worin die Sendemedienempfangsstation (C) einen Empfänger (10) umfaßt, der auf eine Anzahl verschiedener Sendekanäle eingestellt werden kann, wobei die Kommunikationsvorrichtung aufgebaut ist, um den Kanal zu steuern, auf den der Sendemedienempfänger eingestellt ist.

16. Vorrichtung gemäß Anspruch 15, worin der Sendemedienempfänger (10) auf einen aus einer Anzahl Sendefemsehkanäle eingestellt werden kann.

17. Vorrichtung gemäß einem der Ansprüche 14 bis 16, worin das Sendemedienempfangssystem (C) einen Sendemedienempfänger umfaßt, der aufgebaut ist, um Spieldaten zu empfangen, wobei die Datenquellen aufgebaut sind, um Spiele-Spieldaten zu erzeugen, die an eine Spielsteuerung des Sendemedienempfangssystems übertragen werden.

**Revendications**

1. Procédé de transmission d'éléments d'information à partir d'une pluralité de sources de données (25-28) à une destination de données (16) sur un canal de données commun, le procédé comprenant les étapes consistant à :

transmettre des éléments d'information à partir de chaque source de données (25-28) à la destination de données sous la forme d'une série de paquets de données, chaque paquet de données étant séparé des paquets de données successifs transmis par la même source de données par une période de répétition, la période de répétition de chaque source de données étant différente des périodes de répétition des autres sources de données; et
transmettre de manière répétée chaque élément d'information à partir de la même source de données en au moins N paquets de données adjacents, N étant le nombre de sources de données, en vue d'assurer qu'au moins un des N paquets de données successifs est reçu à la destination de données sans chevaucher d'autres paquets de données en provenance des autres sources de données, **caractérisé en ce que**

période n = 2*période de salve*[(N-1)$^2$+n]

où période n est la période de répétition de la n$^{\text{ième}}$ source de données et période de salve est un paramètre relatif à la longueur des paquets de données.

2. Procédé selon la revendication 1, dans lequel les paquets de données en provenance de chaque source de données sont transmis par l'intermédiaire d'une liaison sans fil.

3. Procédé selon la revendication 2, dans lequel la liaison sans fil est une liaison infrarouge.

4. Procédé selon l'une quelconque des revendications précédentes, dans lequel chaque élément d'information est transmis à partir de la même source de données dans N paquets de données.

5. Procédé selon l'une quelconque des revendications précédentes pour commander un système de réception de média diffusé (C), le procédé comprenant la transmission d'éléments d'information de commande au système de réception de média diffusé.

6. Procédé selon la revendication 5, dans lequel les éléments d'information contrôlent un canal sur lequel le système de réception de média diffusé (C) est réglé.

7. Procédé selon la revendication 5 ou la revendication 6, dans lequel le système de réception de média diffusé (C) est apte à recevoir des données de jeu diffusé, les sources de données étant aptes à générer des données pour jouer à un jeu qui sont transmises à un système de commande de jeu faisant partie du système de réception de média diffusé.

8. Dispositif de communication comprenant une destination de données (16) comportant un récepteur destiné à recevoir des données transmises sur un canal de données commun; et une pluralité de sources de données (25-28), comprenant chacune:

a) un émetteur (36) destiné à transmettre des éléments d'information à la destination de données sur le canal de données commun; et
b) un processeur (35) destiné à commander l'émetteur (36) de telle sorte que l'émetteur soit apte à transmettre les éléments d'information sous la forme d'une série de paquets de données, chaque paquet de données étant séparé des paquets de données successifs transmis par la même source de données par une période de répétition, et chaque élément d'information étant transmis dans au moins N paquets de données adjacents à partir de la même source de données, où N est le nombre de sources de données,

la période de répétition de chaque source de données étant différente des périodes de répétition des autres sources de données, **caractérisé en ce**

**que**

$$\text{période n} = 2*\text{période de salve}*[(N-1)^2+n]$$

où période n est la période de répétition de la n$^{\text{ième}}$ source de données et période de salve est un paramètre relatif à la longueur des paquets de données.

**9.** Dispositif selon la revendication 8, dans lequel le récepteur (16) et les émetteurs (36) communiquent par l'intermédiaire d'une liaison sans fil.

**10.** Dispositif selon la revendication 9, dans lequel la liaison sans fil est une liaison infrarouge.

**11.** Dispositif selon l'une quelconque des revendications 8 à 10, dans lequel chaque source de données (25-28) comprend un oscillateur (39) qui commande la période de répétition de la source de données, dans lequel l'oscillateur a une précision égale à ou moins bonne que 1 %.

**12.** Dispositif selon l'une quelconque des revendications 8 à 11, dans lequel chaque source de données (25-28) comprend un compteur (41) qui est apte à effectuer un comptage cyclique pour générer un signal rythmé de créneau temporel, dans lequel chaque processeur est apte à répondre à un signal rythmé de créneau temporel pour ordonner à l'émetteur de transmettre un paquet de données.

**13.** Dispositif selon l'une quelconque des revendications 8 à 12, dans lequel la destination de données (16) est incapable de transmettre des données aux sources de données (25-28), et dans lequel les sources de données sont incapables de recevoir des données en provenance de la destination de données.

**14.** Dispositif de communication selon l'une quelconque des revendications 8 à 13, le dispositif de communication commandant un système de réception de média diffusé.

**15.** Dispositif selon la revendication 14, dans lequel la station de réception de média diffusé (C) comprend un récepteur (10) qui peut être réglé sur un d'un certain nombre de canaux de diffusion différents, le dispositif de communication étant apte à contrôler le canal sur lequel le récepteur de média diffusé est réglé.

**16.** Dispositif selon la revendication 15, dans lequel le récepteur de média diffusé (10) peut être réglé sur l'un parmi un certain nombre de canaux de télévision diffusée.

**17.** Dispositif selon l'une quelconque des revendications 14 à 16, dans lequel le système de réception de média diffusé (C) comprend un récepteur de média diffusé apte à recevoir des données de jeu, les sources de données étant aptes à générer des données pour jouer à un jeu qui sont transmises à un système de commande de jeu du système de réception de média diffusé.

# Fig.1.

# Fig.2.

Fig.3.

# Fig.4.

EP 0 921 657 B1